# EUROPEAN PATENT SPECIFICATION

(11) **EP 3 250 854 B1**
(45) Date of publication and mention of the grant of the patent: **03.04.2019**
(21) Application number: 16714562.2
(22) Date of filing: 28.01.2016
(51) Int. Cl.: F23G 7/10

(54) **ENERGY GENERATION PLANT AS WELL AS METHOD FOR GENERATING ENERGY FROM WET BIOMASS**
ENERGIEERZEUGUNGSANLAGE SOWIE VERFAHREN ZUR ENERGIEERZEUGUNG AUS FEUCHTER BIOMASSE
INSTALLATION ET PROCÉDÉ DE GÉNÉRATION D'ÉNERGIE À PARTIR D'UNE BIOMASSE HUMIDE

(30) Priority: 28.01.2015 NL 2014201
(43) Date of publication of application: 06.12.2017
(73) Proprietor: Drynovations B.V., 5427 DG Boekel (NL)
(72) Inventor: VERBRUGGEN, Marinus, Johanus, Petrus, 5469 AX Erp (NL)
(74) Representative: Verhees, Godefridus Josephus Maria
(86) International application number: PCT/NL2016/050067
(87) International publication number: WO 2016/122322

(56) References cited:
- EP-A1- 0 981 018
- WO-A2-2013/182604
- FR-A1- 2 983 901

## Description

### Field of the invention

The invention relates to an energy generation plant as well as method for generating energy from wet biomass or compost, comprising:
- a drying system for drying wet biomass,
- a thermal conversion system for generating energy from dried biomass, and
- a heat exchange system which heats a heat transfer medium by the heat produced during the thermal conversion and transports this heat transfer medium to the drying system where the heat in the heat transfer medium is utilized for the drying process,
- where the heat transfer medium is molten salt or molten metal.

The inventive idea behind a thermal conversion system may be, for example, a combustion boiler, a pyrolysis system, a gasification system.

### State of the art

An energy generation plant is known from WO2013/182604A1. In this known energy generation plant the thermal conversion system is formed by a combustion boiler. The wet biomass is dried there by heat coming from the combustion boiler. Furthermore, in this known plant water is heated or steam is overheated by means of flue gases either or not by first heating by it molten salt and subsequently heating the steam/water by this. By means of the heat present in the overheated steam a medium (air) is heated via a heat exchanger, which medium is used for the drying process.

Furthermore, combustion boilers are known in which the heat transfer medium is water. This water is kept under preessure and during operation reaches a temperature far beyond 100 °C. This overheated water may subsequently be used for various objectives, among other things for generating power. In that case the overheated steam goes to a steam separator after which the formed steam is led to a steam turbine for generating electricity. A high efficiency rate can be achieved by working with overheated steam.

As a result of the overpressure and overheating of the water found in the boiler wall, stringent requirements are made on the boiler wall so as to reduce the hazard of explosions to an acceptable level. If the known combustion boiler is used for combusting biomass, to prevent corrosion the boiler wall should be made of corrosion-resistant material. More particularly when biomass is combusted, agressive sediments are formed on the inner wall of the combustion boiler so that this inner wall should be made of a high-grade material. This would render the known combustion boiler relatively expensive.

Combustion boilers are also known that have a brick or concrete boiler wall. Brick or concrete is also resistant to agressive sediments it is true, but at a small thickness it is not capable of resisting high pressures. The water is then not heated in the boiler wall, but in a heat exchanger where the combustion gases are directly led through. A disadvantage of this is that sediments are formed on the tubes of this heat exchanger and the tube walls are decayed by agressive components in the flue gases. In consequence, these heat exchangers are to be cleaned on a regular basis and be replaced periodically in addition to the ancillary charges such as material, labour and standstill.

### Summary of the invention

It is an object of the invention to provide an energy generation plant of the type defined in the opening paragraph which is relatively cost-effective. For this purpose the energy generation plant according to the invention is characterized in that
- the heat exchange system is arranged such that the heat transfer medium is heated to beyond 350 °C and is fed to the drying process at this temperature,
- the thermal conversion system comprises a combustion boiler, and
- the drying system comprises an overheated-steam drier in which overheated steam comes into contact with the wet biomass to be dried, in which system the steam needed for drying the biomass is heated by the heat transfer medium to a temperature exceeding 150 °C.

More particularly by implementing the property of molten salt and molten metal of allowing to be heated up to high temperatures, it is possible to apply sufficient energy (heat) to carry out therewith in a sufficiently rapid manner the drying process of wet biomass for thermally converting wet biomass in a continuous process and in an efficient manner. Suitable molten salts such as Dynalene MS-1 and MS-2 are merely used as an example and have a boiling point of far beyond 500 °C and may thus be heated under atmospheric pressure up to high temperatures before they start boiling, so that much energy can be stored in them. Since the molten salt or molten metal is not under pressure, it is not necessary to comply with the inspection demands for pressurized systems. This reduces the inspection costs as a result of which the cost of design and manufacturing of the energy generation plant may be maintained at a low level. Also the use of molten salts/molten metals is safer and in the event of leakages it leads to fewer problems with regard to the environment than for example the use of thermal oil. Furthermore, molten salt/molten metal is non-flammable in case it leaks into the combustion chamber.

A circulating fluidized bed boiler which, in addition, is provided with a riser, turns out to give much better satisfaction for this application than a more conventional and more obvious bubble fluidized bed boiler because of the better possibility to control temperatures in the boiler and more specifically in the riser because the heat transfer medium is circulated not only as a cooling medium, but by this medium also the temperature in the riser of this fluidized bed boiler is controlled. Preferably, the temperature in the riser is controlled per level. In order to enhance the efficiency of the energy generation plant according to the invention it is preferably further provided with an energy recovery system for recovering energy from the water vapour that has evolved from the drying process in the form of steam, which at a later stage can also be converted into heat via a condensation process.

Drying with overheated steam exceeding 150 °C turns out to be an utterly efficient process for drying more particularly wet biomass. Preferably, the overheated-steam drier is arranged such that in it the heat transfer medium is heated to a temperature exceeding 180 °C. This has turned out to be optimal more specifically for processing mushroom compost.

It should be observed that from FR2983901A is known a steam-utilizing energy generation plant where steam from a first turbine is reheated by means of molten salt coming from the combustion bed. In this process molten salt is not used for the drying of the biomass.

For further enhancing the efficiency of the energy generation plant according to the invention, the plant is further provided with a further energy recovery system for recovering energy from the molten salt or molten metal coming from a further drying system, by further withdrawing heat from the molten salt or molten metal coming from the drying system and using this heat for, for example, the production of steam for driving by steam a turbine for generating power or using the steam for heating purposes.

An embodiment of the energy generation plant according to the invention is characterized in that the energy generation plant further includes a preheating system in which the heat transfer medium coming from a storage vessel is preheated by the flue gas coming from the thermal conversion system.

A further embodiment of the energy generation plant according to the invention is characterized in that the thermal conversion system is formed by a combustion boiler comprising a boiler wall and a combustion space situated inside, which boiler wall is double-walled having a space between the inner wall and the outer wall in which the molten salt or molten metal is present.

A still further embodiment of the energy generation plant according to the invention is characterized in that the energy generation plant further includes a storage vessel for the heat transfer medium which is situated in a circuit in which the heat transfer medium is circulated by a pump included in the circuit for this purpose and which also the double-walled boiler wall and the overheated-steam drier form part of, where the storage vessel is situated at the lowest point of the circuit.

The storage vessel is preferably provided with heating means for heating the heat transfer medium and the circuit includes between the storage vessel and the boiler wall a bypass valve by which the boiler wall can be shut off from the circuit and the heat transfer medium is led from the storage vessel to the overheated-steam drier.

Yet a further embodiment of the energy generation plant according to the invention is characterized in that the space between the inner wall and outer wall of the boiler wall contains a tube which is surrounded by the molten salt or molten metal, which tube is connected with the ends to input and output openings provided in the outer wall of the boiler wall and is filled with a heat discharge medium, for example water. The space between the inner wall and outer wall of the boiler is filled with the molten salt or molten metal and the tube is situated in this space and is surrounded by the molten salt, while during operation water is flowing through the tube. The molten salt or molten metal conducts the heat to the water flowing through the tube. There is preferably a high pressure in the tube so that overheated water is developed in it.

The boiler wall of the combustion boiler according to the invention may be made of a low-grade corrosion resistant material such as stone or concrete, which is possible since there is no overpressure between the inner wall and the outer wall. The boiler wall may also be made of a corrosion resistant type of steel, which can be easily processed and is affordable since it may be manufactured as a thin specimen because no pressure will be applied from the molten salt or molten metal. In the combustion boiler according to the invention there is no pressure body in which large amounts of water/steam are under pressure. Only the tube having relatively small contents is under pressure. This considerably reduces inspection costs as a result of which the cost of design and manufacture of the combustion boiler can be maintained at a low level. Optionally, the molten salt or molten metal can be transported without overpressure worth mentioning at high temperature to external users either or not via an external heat exchanger.

The combustion boiler thus allows of the advantage of a cost effective construction since no overpressure prevails in the space between the boiler walls, and also has the advantage entailed by (overheated) steam that the water flowing through the tube is heated properly as a result of the good conductive properties of the molten salt or molten metal.

The salt is to have such composition that it fluidizes at the operation temperature prevailing in the boiler and that it is a good heat conductor. Salt has the advantageous property that it is a very good conductor and is non-flammable.

Again a further embodiment of the energy generation plant according to the invention is characterized in that the tube is a helical tube. In consequence, the water can be circulated through the boiler wall in a simple and optimal manner.

Preferably, the tube is present in a double helix, of which the helical lines are connected to each other at the bottom of the boiler wall and the input and output are situated at the top of the outer wall of the boiler wall. As a result, the input and output are close together at one end so that there is no need to have an opening in the outer wall of the boiler wall for the passage of the tube.

A further embodiment of the energy generation plant according to the invention is characterized in that the energy generation plant further includes a pump for internally circulating the molten salt or molten metal in the space between the inner wall and outer wall and/or pumping the molten salt or molten metal to an external system for the purpose of energy exchange.

A preferred embodiment of the energy generation plant according to the invention is characterized in that the bottom of the combustion boiler is formed by a fluidized bed combustion boiler. A fluidized bed combustion boiler is pre-eminently suitable for combustion of biomass. In combination with the boiler wall described above this combustion boiler forms a pre-eminently suitable combustion boiler for combustion of relatively humid biomass. As a result, the combustion boiler of the energy generation plant according to the invention is particularly suitable for combustion of wet biomass, such as mushroom compost or compost. A bubbling bed fluidized bed combustion boiler is known for example from EP 0 981 018 A1.

The invention likewise relates to a method for generating energy from wet biomass, comprising:
- the drying of wet biomass,
- the thermal conversion of the dried biomass, and
- the heating of a heat transfer medium by the heat produced during the thermal conversion and the application of this heated heat transfer medium to the drying process of the wet biomass.

Thermal conversion may be considered to be, for example, combustion, but other known thermal conversion processes are possible too.

With respect to the method, the invention is characterized in that the heat transfer medium is molten salt or molten metal and is heated to beyond 200 °C and is fed to the drying system at this temperature. The heat transfer medium is preferably heated to beyond 350 °C and fed to the drying system at this temperature.

An embodiment of the method according to the invention is characterized in that furthermore energy can be recovered from the water vapour that has evolved from the drying process.

A preferred embodiment of the method according to the invention is characterized in that the wet biomass is dried by overheated steam that is brought to a temperature exceeding 150 °C by means of the heat transfer medium. The overheated steam is preferably brought to a temperature exceeding 180 °C.

The heat transfer medium is preferably preheated by the combustion gas coming from the thermal conversion system before it is fed to the thermal conversion system to be heated further there.

Furthermore, energy is recovered preferably from the energy coming from the heat transfer medium after the drying process before the heat transfer medium is preheated.

### Brief description of the drawing figures

The invention will be further described below in more detail with reference to examples of embodiment of an energy generation plant according to the invention provided with a combustion boiler and represented in the drawing figures, in which:
Fig. 1 gives a diagrammatic view of a first embodiment of the energy generation plant according to the invention;
Fig. 2 gives a perspective view of a thermal conversion system comprising a heat exchange system of a second embodiment of the energy generation plant according to the invention; and
Fig. 3 shows the plant shown in Fig. 2 with combustion boiler in a partly cut-away view.

### Detailed description of the drawing figures

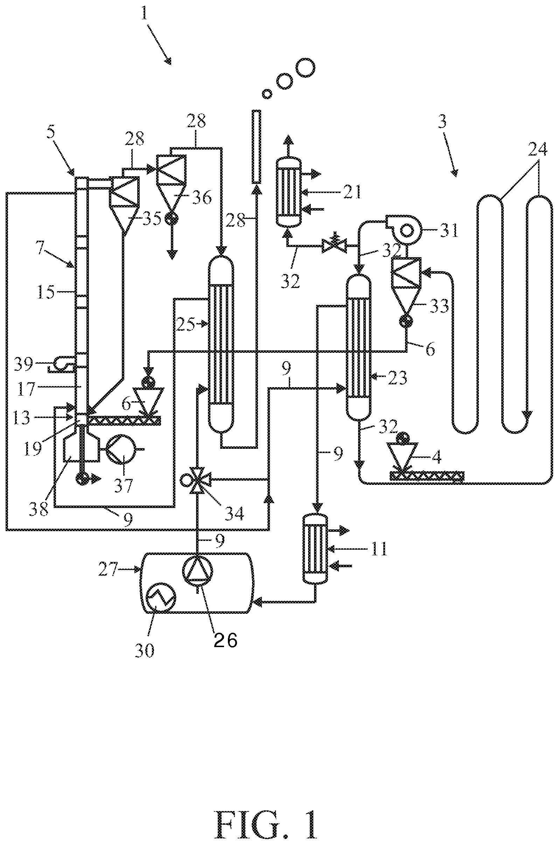

Fig. 1 gives a diagrammatic view of a first embodiment of the energy generation plant according to the invention. This energy generation plant 1 comprises a drying system 3 for drying wet biomass 4, as well as a thermal conversion system 5 for generating energy from dried biomass 6, and a heat exchange system 7 which heats with the heat produced by the thermal conversion a heat transfer medium 9 to a temperature in excess of 350 °C and feeds this heat transfer medium to the drying system 3 where the heat in the heat transfer medium is utilized for the drying process. The heat transfer medium 9 is molten salt or molten metal.

The drying system 3 is arranged as an overheated-steam drier where in a heat exchanger 23 steam 32 needed for drying the wet biomass 4 is heated to a temperature of 200 °C by the heat transfer medium 9 which enters the heat exchanger 23 at a temperature beyond 350 °C. A fan 31 provides circulation of the steam 32 in the drying system 3. Furthermore, a cyclone separator 33 provides the separation of the dried biomass 6 and the steam 32. The energy generation plant 1 further includes an energy recovery system 21 for recovering energy from the excess of water vapour 32 that has evolved from the drying process. At this point in the process the overheated steam still has a temperature of approximately 115 °C, but this may also be higher.

The heat transfer medium 9 leaves the overheated-steam drier 3 at a temperature of approximately 250 °C and may thus be returned to the thermal conversion system 5 where it is reheated to beyond 350 °C. In this embodiment, however, first even more useful energy is recovered from the heat transfer medium 9 in an energy recovery system 11, while the temperature further drops to approximately 150 °C. Subsequently, the heat transfer medium 9 returns to the storage vessel 27 and is then pumped to a preheating system 25 by a pump 26 in which preheating system it is preheated to approximately 250 °C by energy from the combustion gas 28 of approximately 750 °C resulting from the combustion process, which combustion gas thereby drops in temperature to approximately 180 °C. A pair of cyclone separators 35 and 36 remove any solid particles from the flue gas, where a first cyclone separator separates the sand coming from the fluidized bed from the flue gas and returns it to the fluidized bed and the second cyclone separator removes ash particles from the flue gas.

The thermal conversion system is formed by a combustion boiler 13 provided with a riser and a boiler wall 15 and a combustion space 17 situated inside. The bottom of the combustion boiler 13 is here too formed by a circulating fluidized bed combustor 19. An air blower 37 blows the required amount of air via an air chamber 38 into the fluidized bed combustor 19. For initiating the combustion process another start burner 39 may be utilized. The riser has several levels which are each cooled to an optimal temperature by the heat transfer medium. The boiler wall 15 is double walled and is cooled by the heat transfer medium 9. Thus the boiler wall 15 at the same time forms the heat exchange system 7.

For starting the thermal conversion operation of the dried biomass 6 first the heat transfer medium is 9 heated by heating means 30 which may be arranged as an electric heating or a gas/oil burner. Once the heat transfer medium 9 has been heated sufficiently, it is not pumped to the preheating system 25 but led to the heat exchanger 23 via the bypass valve 34 in which exchanger 23 overheated steam 32 is produced. This overheated steam 32 is brought into contact with the wet biomass 4 in the drying system 3 in a tunnel 24 containing a long conveyor belt (or in a rotating drying drum) in which the biomass is dried. Subsequently, with the dried biomass 6 the thermal conversion process is started. Thereafter, the heat transfer medium 9 is only heated by the heat released during the thermal conversion process in the heat exchange system 7 and in the preheating system 25 by switching over the bypass valve 34.

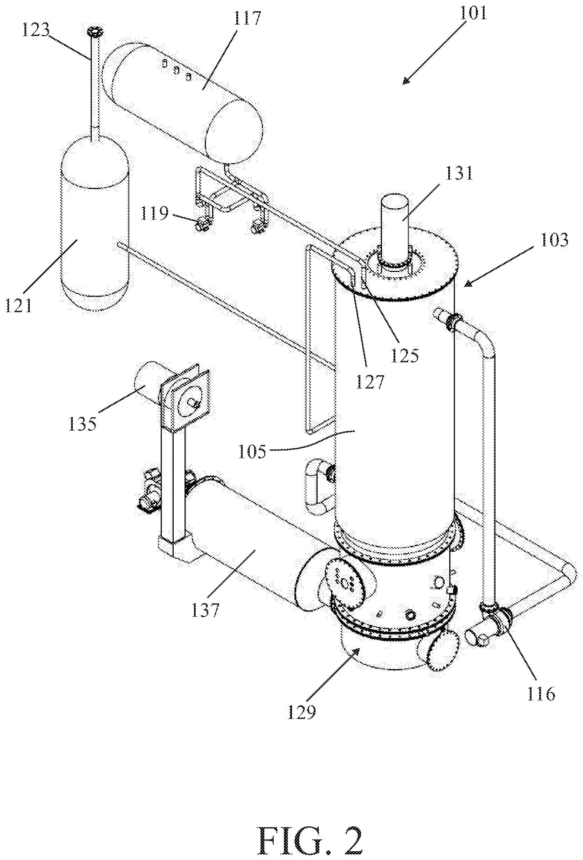

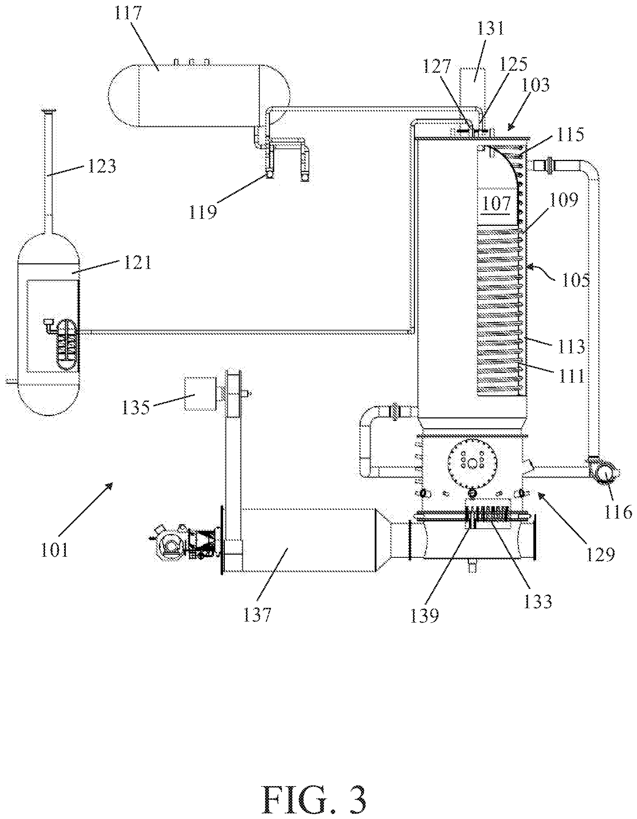

Figs. 2 and 3 show in a perspective view and a partly cut-away side view respectively the thermal conversion system with a heat exchange system of a second embodiment of the energy generation plant 101 according to the invention. Also this energy generation plant 101 comprises a drying system for wet biomass which may have an identical arrangement to the drying system 3 described above. Furthermore, this energy generation plant 101 may also be provided with a preheating system for the heat transfer medium identical with the preheating system 25 described above. The thermal conversion system comprises a combustion boiler 103 which is provided with a boiler wall 105 having a combustion space 107 inside. The boiler wall is double walled having a space 109 between the inner wall and outer wall 111 and 113. The inner wall 111 of the combustion boiler may be made of for example stone or concrete or may be formed by a steel wall clad by a layer of stone or concrete. The inner wall may also be formed by a thin corrosion resistant material (steel). Since the material (steel) can at most adopt the temperature of the molten salt or molten metal behind it, the inner wall may be thin and without protection since no pressure is applied to it. Preferably, said material is a corrosion-resistant type of steel that allows easy processing. The inner wall is preferably thin and hence well affordable. A relatively thin inner wall will suffice because no pressure is applied to it by the medium. Suitable types of steel are for example: Inconel, Inox, or a Hastelloy.

Between the inner wall and outer wall there is a helical tube 115 and the space 109 between the inner wall and outer wall and around the tube is filled with a salt. This salt forms a heat transfer medium and has a composition such that it makes a good heat transfer medium and fluidizes during operation of the combustion boiler at the then prevailing operating temperature. A pump 116 circulates the molten salt or molten metal in the space between the inner wall and outer wall to achieve homogeneous heating and heat transfer to the water present in the tube 115. If so desired, the pump may also circulate the molten salt or molten metal to an external system, for example, the drier for the biomass for the purpose of exchange of energy.

The heat transfer medium may also be transported by a circulation system to external users, such as:
- an external heat exchanger for for example the production of steam (for example in a steam turbine),
- an ORC (Organic Rankine Cycle) turbine,
- a compost hygienisation system,
- an absorption cooling machine,
- a ThermoAcoustic heat Pump or turbine (TAP),
- an SSD (Superheated Steam Drying) system.

An SSD system is pre-eminently suitable for drying wet biomass such as champost. By means of an SSD system high-grade energy (i.e. medium at a high temperature) can be recovered and be re-used in the process or used for other applications.

During operation water flows at overpressure through the tube and is heated during this operation to more than 180 °C. This water comes from a storage tank 117 and is pumped into the tube by a water pump 119. The heated water then flows to a steam separator 121 from where the steam is led via a discharge pipe 123 to a steam turbine or other system for further useful application.

The tube 115 is present in a double helix of which the helical lines are in connection with each other at the bottom of the boiler wall and the input and output 125 and 127 are situated at the top of the outer wall of the boiler wall. As a result, the input and output are situated at one end close to each other, so that no opening is needed at the bottom of the outer wall of the boiler wall for passing the tube through and the tube can be fitted to the boiler wall in a simple manner and for maintenance purposes also be removed from the boiler wall in a simple manner.

The bottom of the combustion boiler is formed by a fluidized bed combustor 129. At the top of the combustion boiler there is provided a discharge opening 131 through which the combustion gases are led to a heat exchange system or other useful system. The fluidized bed 133 in the fluidized bed combustor is kept circulating by blowing air into the fluidized bed with a fan 135 via an air mixer with start burner 137 and a piping system 139. The fluid is for example sand, ceramic material or glass grains or a mixture thereof.

Albeit the invention has been elucidated in the foregoing with reference to the drawing figures, it should be set out that the invention is not by any manner or means restricted to the embodiments shown in the drawing figures. The invention also extends to any embodiments deviating from the embodiments shown in the drawing figures within the scope defined by the claims.

## Claims

1. An energy generation plant (1; 101) for generating energy from wet biomass, comprising:
- a drying system (3) for drying wet biomass (4) or compost,
- a thermal conversion system (5) for generating energy from dried biomass (6) or compost, and
- a heat exchange system (7) which heats a heat transfer medium (9) by the heat produced during the thermal conversion and transports this heat transfer medium to the drying system where the heat in the heat transfer medium is utilized for the drying process,
- where the heat transfer medium (9) is molten salt or molten metal,
**characterized in that**
- the heat exchange system (7) is arranged such that the heat transfer medium is heated to beyond 350 °C and is fed to the drying system (3) at this temperature,
- the thermal conversion system (5) comprises a circulating fluidized bed boiler (19) and
- the drying system comprises an overheated-steam drier (23) in which overheated steam comes into contact with the wet biomass to be dried, in which drying system the steam needed for drying the biomass is heated by the heat transfer medium (9) to a temperature exceeding 150 °C.

2. An energy generation plant (1; 101) as claimed in claim 1, **characterized in that** the overheated-steam drier (23) is arranged such that in it the heat transfer medium (9) is heated to a temperature exceeding 180 °C.

3. An energy generation plant (1; 101) as claimed in claim 1 or 2, **characterized in that** the energy generation plant further includes an energy recovery system (21) for recovering energy from the water vapour that has evolved from the drying process.

4. An energy generation plant (1; 101) as claimed in any one of the preceding claims, **characterized in that** the energy generation plant further includes a preheating system (25) in which the heat transfer medium (9) coming from a storage vessel (27) is preheated by the combustion gas (28) coming from the thermal conversion system.

5. An energy generation plant (1; 101) as claimed in claim 4, **characterized in that** the energy generation plant further includes a further energy recovery system (11) for recovering energy from the molten salt or molten metal coming from the drying system.

6. An energy generation plant (1; 101) as claimed in any one of the preceding claims, **characterized in that** the thermal conversion system is formed by a combustion boiler (13; 103) comprising a boiler wall (15; 105) and a combustion space (17; 107) situated inside, which boiler wall is double walled having a space (109) between the inner wall and the outer wall (111, 113) in which the molten salt or molten metal is present.

7. An energy generation plant (1) as claimed in claim 6, **characterized in that** the energy generation plant further includes a storage vessel (27) for the heat transfer medium which is situated in a circuit in which the heat transfer medium is circulated by a pump included in the circuit for this purpose and which also the double-walled boiler wall (15) and the overheated-steam drier (23) form part of, where the storage vessel is situated at the lowest point of the circuit.

8. An energy generation plant (1) as claimed in claim 7, **characterized in that** the storage vessel (27) is provided with heating means for heating the heat transfer medium and the circuit includes between the storage vessel and the boiler wall (15) a bypass valve (34) by which the boiler wall can be shut off from the circuit and the heat transfer medium is led from the storage vessel to the overheated-steam drier (23).

9. An energy generation plant (101) as claimed in claim 6, 7 or 8, **characterized in that** the space (109) between the inner wall and outer wall (111, 113) of the boiler wall (105) contains a tube (115) which is surrounded by the molten salt or molten metal, which tube is connected with the ends to input and output openings (125, 127) provided in the outer wall (113) of the boiler wall and is filled with a heat discharge medium.

10. An energy generation plant (101) as claimed in claim 9, **characterized in that** the tube (115) is a helical tube.

11. An energy generation plant (101) as claimed in claim 10, **characterized in that** the tube (115) is present in a double helix in which the helical lines are connected to each other at the bottom of the boiler wall (105) and the input and output (125, 127) are situated at the top of the outer wall (113) of the boiler wall (105).

12. An energy generation plant (101) as claimed in claim 9, 10 or 11, **characterized in that** the energy generation plant further includes a pump for internally circulating the molten salt or molten metal in the space (109) between the inner wall and the outer wall (111, 113) and/or pumping the molten salt or molten metal to an external system for the purpose of energy exchange.

13. An energy generation plant (1; 101) as claimed in claim 9, 10, 11 or 12, **characterized in that** the bottom of the combustion boiler (13; 103) is formed by a fluidized bed combustor (19; 129).

14. A method for generating energy from wet biomass, comprising:
- the drying of wet biomass or compost (4),
- the thermal conversion of the dried biomass or compost (6), and
- the heating of a heat transfer medium (9) by the heat produced during the thermal conversion and the application of this heated heat transfer medium to the drying process of the wet biomass or compost,
- where the heat transfer medium (9) is molten salt or molten metal,
**characterized in that** the thermal conversion uses a circulating fluidized bed boiler (19), and **in that** the heat transfer medium (9) is heated to beyond 350 °C and is fed to the drying system at this temperature, where the wet biomass is dried by overheated steam that is brought to a temperature exceeding 150 °C by means of the heat transfer medium.

15. A method as claimed in claim 14, **characterized in that** overheated steam is brought to a temperature exceeding 180 °C.

16. A method as claimed in claim 14 or 15, **characterized in that** for starting the thermal conversion operation of the dried biomass (6) first the heat transfer medium (9) is heated by heating means (30) and overheated steam is produced by means of the heat transfer medium by which heat the wet biomass is dried, after which, when a sufficient amount of biomass has been dried, the thermal conversion process is started and the heat transfer medium is heated only by the heat released from the thermal conversion process.

17. A method as claimed in claim 14, 15 or 16, **characterized in that** furthermore energy is recovered from the water vapour that has developed during the drying process.

18. A method as claimed in claim 14, 15, 16 or 17, **characterized in that** the heat transfer medium (9) is preheated by the combustion gas (28) coming from the thermal conversion system before it is fed to the thermal conversion system to be heated further there.

19. A method as claimed in claim 18, **characterized in that** redundant energy is recovered from the heat transfer medium (9) coming from the drying process before the heat transfer medium is preheated.

## Patentansprüche

1. Energieerzeugungseinrichtung (1; 101) für die Erzeugung von Energie aus feuchter Biomasse, die Folgendes umfasst:
- einen Trockenapparat (3) zum Trocknen von feuchter Biomasse (4) oder Kompost,
- eine Einrichtung für thermische Umwandlung (5) zur Erzeugung von Energie aus getrockneter Biomasse (6) oder getrocknetem Kompost, und
- einen Wärmeaustauscher (7), in dem mit der bei thermischer Umwandlung erzeugten Wärme ein Wärmeübertragungsmittel (9) erhitzt und dieses Wärmeübertragungsmittel zu dem Trockenapparat gefördert wird, wo die in dem Wärmeübertragungsmittel enthaltene Wärme für den Trockenvorgang genutzt wird,
- wobei es sich bei dem Wärmeübertragungsmittel (9) um geschmolzenes Salz oder geschmolzenes Metall handelt,
**dadurch gekennzeichnet, dass**
- der Wärmeaustauscher (7) so ausgeführt ist, dass das Wärmeübertragungsmittel auf über 350 °C erhitzt und mit dieser Temperatur dem Trockenapparat (3) zugeführt wird,
- die Einrichtung für thermische Umwandlung (5) einen Kessel mit zirkulierender Wirbelschicht (13; 103) umfasst, und
- der Trockenapparat einen Heißdampftrockner (23) umfasst, in dem überhitzter Dampf mit der zu trocknenden Biomasse in Kontakt gebracht wird, und wobei zum Trocknen der Biomasse benötigter Dampf von dem Wärmeübertragungsmittel (9) auf eine Temperatur von mehr als 150 °C erhitzt wird.

2. Energieerzeugungseinrichtung (1; 101) nach Anspruch 1, **dadurch gekennzeichnet, dass** der Heißdampftrockner (23) so ausgeführt ist, dass das Wärmeübertragungsmittel (9) darin auf eine Temperatur von mehr als 180 °C erhitzt wird.

3. Energieerzeugungseinrichtung (1; 101) nach einem der Ansprüche 1 oder 2, **dadurch gekennzeichnet, dass** die Energieerzeugungseinrichtung ferner eine Energierückgewinnungseinrichtung (21) für die Rückgewinnung von Energie aus dem Wasserdampf umfasst, der beim Trockenvorgang entstanden ist.

4. Energieerzeugungseinrichtung (1; 101) nach einem der vorangegangenen Ansprüche, **dadurch gekennzeichnet, dass** die Energieerzeugungseinrichtung ferner eine Vorwärmeinrichtung (25) umfasst, in der das aus einem Vorratsbehälter (27) zugeführte Wärmeübertragungsmittel (9) von dem aus der Einrichtung für thermische Umwandlung zugeführten Gas (28) vorerhitzt wird.

5. Energieerzeugungseinrichtung (1; 101) nach Anspruch 4, **dadurch gekennzeichnet, dass** die Energieerzeugungseinrichtung ferner eine weitere Energierückgewinnungseinrichtung (11) für die Rückgewinnung von Energie aus dem geschmolzenen Salz oder geschmolzenen Metall umfasst, das den Trockenapparat durchlaufen hat.

6. Energieerzeugungseinrichtung (1; 101) nach einem der vorangegangenen Ansprüche, **dadurch gekennzeichnet, dass** die Einrichtung für thermische Umwandlung durch einen Verbrennungskessel (13; 103) gebildet wird, der mit einer Kesselwand (15; 105) und einem innerhalb dieser Wandung angeordneten Verbrennungsraum (17; 107) versehen ist, wobei die Kesselwand doppelwandig mit einem Hohlraum (109) zwischen der Innen- und der Außenwand (111, 113) ausgebildet ist, in dem sich das geschmolzene Salz oder geschmolzene Metall befindet.

7. Energieerzeugungseinrichtung (1) nach einem der vorangegangenen Ansprüche, **dadurch gekennzeichnet, dass** die Energieerzeugungseinrichtung ferner einen Speicherbehälter (27) für das Wärmeübertragungsmittel umfasst, der Teil eines Kreislaufs ist, in dem das Wärmeübertragungsmittel von einer zu diesem Zweck in den Kreislauf eingefügten Pumpe umgewälzt wird und zu dem auch der doppelwandige Kessel (15) und der Heißdampftrockner (23) gehören, wobei der Speicherbehälter am tiefsten Punkt des Kreislaufs angeordnet ist.

8. Energieerzeugungseinrichtung (1) nach Anspruch 7, **dadurch gekennzeichnet, dass** der Speicherbehälter (27) mit Heizmitteln zum Erwärmen des Wärmeübertragungsmittels versehen ist und sich in dem Kreislauf zwischen dem Speicherbehälter und der Kesselwand (15) ein Bypassventil (34) befindet, mit dem die Kesselwand von dem Kreislauf getrennt werden kann und das Wärmeübertragungsmittel von dem Speicherbehälter zu dem Heißdampftrockner (23) geleitet wird.

9. Energieerzeugungseinrichtung (101) nach einem der Ansprüche 6, 7 oder 8, **dadurch gekennzeichnet, dass** sich in dem Hohlraum (109) zwischen den Innen- und Außenwänden (111, 113) der Kesselwand (105) ein Rohr (115) befindet, das von dem geschmolzenen Salz oder geschmolzenen Metall umgeben ist, wobei das Rohr an den Enden mit in der Außenwand (113) der Kesselwand vorhandenen Ein- und Auslassöffnungen (125, 127) verbunden und mit einem Wärmeableitungsmittel gefüllt ist.

10. Energieerzeugungseinrichtung (101) nach Anspruch 9, **dadurch gekennzeichnet, dass** das Rohr (115) spiralförmig verläuft.

11. Energieerzeugungseinrichtung (101) nach Anspruch 10, **dadurch gekennzeichnet, dass** das Rohr (115) eine doppelte Spiralform aufweist, wobei die Spirallinien im unteren Bereich der Kesselwand (105) miteinander in Verbindung stehen und der Ein- und Auslass (125, 127) im oberen Bereich der Außenwand (113) der Kesselwand (105) angeordnet sind.

12. Energieerzeugungseinrichtung (101) nach einem der Ansprüche 9, 10 oder 11, **dadurch gekennzeichnet, dass** die Energieerzeugungseinrichtung ferner eine Pumpe umfasst, mit der das geschmolzene Salz oder geschmolzene Metall innerhalb des Hohlraums (109) zwischen der Innen- und Außenwand (111, 113) umgewälzt und/oder das geschmolzene Salz oder geschmolzene Metall zum Zweck des Energieaustauschs zu einer externen Vorrichtung gefördert wird.

13. Energieerzeugungseinrichtung (1; 101) nach einem der Ansprüche 9, 10, 11 oder 12, **dadurch gekennzeichnet, dass** der Boden des Verbrennungskessels (13; 103) durch eine Wirbelbettfeuerung (19; 129) gebildet wird.

14. Arbeitsweise für die Erzeugung von Energie aus feuchter Biomasse, die Folgendes umfasst:
- Trocknung von feuchter Biomasse oder feuchtem Mist (4),
- thermische Umwandlung der getrockneten Biomasse oder des getrockneten Mists (6), und
- Erhitzung eines Wärmeübertragungsmittels (9) mit der bei thermischer Umwandlung erzeugten Wärme und die Nutzung dieses erhitzten Wärmeübertragungsmittels zum Trocknen der feuchten Biomasse oder des feuchten Mists,
- wobei es sich bei dem Wärmeübertragungsmittel (9) um geschmolzenes Salz oder geschmolzenes Metall handelt,
**dadurch gekennzeichnet, dass** für die thermische Umwandlung eine Wirbelbettfeuerung (19) eingesetzt und das Wärmeübertragungsmittel (9) auf über 350 °C erhitzt und mit dieser Temperatur dem Trockenvorgang zugeführt wird, wobei die feuchte Biomasse mit Heißdampf getrocknet wird, der mit Hilfe des Wärmeübertragungsmittels auf eine Temperatur von mehr als 150 °C erhitzt wird.

15. Arbeitsweise nach Anspruch 14, **dadurch gekennzeichnet, dass** Heißdampf auf eine Temperatur von mehr als 180 °C erhitzt wird.

16. Arbeitsweise nach einem der Ansprüche 14 oder 15, **dadurch gekennzeichnet, dass** für die Einleitung des Vorgangs der thermischen Umwandlung der getrockneten Biomasse (6) zunächst das Wärmeübertragungsmittel (9) durch Heizmittel (30) erwärmt und mit Hilfe des Wärmeübertragungsmittels Heißdampf erzeugt wird, mit dem die feuchte Biomasse getrocknet wird, worauf bei Erreichen einer ausreichenden Menge von getrockneter Biomasse der Vorgang der thermischen Umwandlung eingeleitet und das Wärmeübertragungsmittel nur noch durch die bei der thermischen Umwandlung freigesetzte Wärme erwärmt wird.

17. Arbeitsweise nach einem der Ansprüche 14, 15 oder 16, **dadurch gekennzeichnet, dass** ferner Energie aus dem Wasserdampf zurückgewonnen wird, der während des Trockenvorgangs entsteht.

18. Arbeitsweise nach einem der Ansprüche 14, 15, 16 oder 17, **dadurch gekennzeichnet, dass** das Wärmeübertragungsmittel (9) von dem aus der Einrichtung für thermische Umwandlung zugeführten Verbrennungsgas (28) vorerhitzt wird, bevor dieses der Einrichtung für thermische Umwandlung zur weiteren Erhitzung zugeführt wird.

19. Arbeitsweise nach Anspruch 18, **dadurch gekennzeichnet, dass** überschüssige Energie aus dem Wärmeübertragungsmittel (9), das aus dem Trockenvorgang zugeführt wird, vor der Vorerhitzung des Wärmeübertragungsmittels zurückgewonnen wird.

## Revendications

1. Dispositif de production d'énergie (1 ; 101) pour produire de l'énergie à partir de biomasse humide, comprenant :
- un dispositif de séchage (3) pour sécher de la biomasse humide (4) ou du compost,
- un dispositif de conversion thermique (5) pour produire de l'énergie à partir de biomasse sèche (6) ou de compost, et
- un dispositif d'échange thermique (7) qui chauffe un fluide caloporteur (9) grâce à la chaleur produite par conversion thermique et transfère ce fluide caloporteur au dispositif de séchage dans lequel on utilise la chaleur du fluide caloporteur pour le processus de séchage,
- où le fluide caloporteur (9) est du sel fondu ou du métal fondu,
**caractérisé en ce que**
- le dispositif d'échange thermique (7) est réalisé de telle sorte que le fluide caloporteur est chauffé jusqu'à une température supérieure à 350 °C et est introduit dans le dispositif de séchage (3) à cette température,
- le dispositif de conversion thermique (5) comprend une chaudière à lit fluidisé circulant (13 ; 103), et
- le dispositif de séchage comprend un sécheur à vapeur surchauffée (23) où de la vapeur surchauffée entre en contact avec la biomasse humide devant être séchée, dans lequel une quantité requise de vapeur est chauffée par le fluide caloporteur (9) jusqu'à une température supérieure à 150 °C pour le séchage de la biomasse.

2. Dispositif de production d'énergie (1 ; 101) selon la revendication 1, **caractérisé en ce que** le sécheur à vapeur surchauffée (23) est réalisé de telle sorte que le fluide caloporteur (9) y est chauffé jusqu'à une température supérieure à 180 °C .

3. Dispositif de production d'énergie (1 ; 101) selon la revendication 1 ou 2, **caractérisé en ce que** le dispositif de production d'énergie comprend de plus un dispositif de récupération d'énergie (21) pour la récupération d'énergie à partir de la vapeur d'eau qui s'est formée lors du processus de séchage.

4. Dispositif de production d'énergie (1 ; 101) selon une des revendications précédentes, **caractérisé en ce que** le dispositif de production d'énergie comprend de plus un dispositif de préchauffage (25) dans lequel le fluide caloporteur (9) provenant d'un tonneau de réserve (27) est préchauffé par le gaz (28) sortant du dispositif de conversion thermique.

5. Dispositif de production d'énergie (1 ; 101) selon la revendication 4, **caractérisé en ce que** le dispositif de production d'énergie comprend de plus un dispositif de récupération d'énergie supplémentaire (11) pour la récupération de l'énergie à partir du sel fondu ou du métal fondu arrivant après le dispositif de séchage.

6. Dispositif de production d'énergie (1 ; 01) selon une des revendications précédentes, **caractérisé en ce que** le dispositif de conversion thermique est constitué d'une chaudière à combustion (13 ; 103) pourvue d'une paroi de chaudière (15 ; 105) et d'une chambre de combustion (17 ; 107) se trouvant à l'intérieur, laquelle paroi de chaudière est à double coque avec un espace (109) entre les parois intérieure et extérieure (111, 113) dans lequel se trouve le sel fondu ou le métal fondu.

7. Dispositif de production d'énergie (1) selon une des revendications précédentes, **caractérisé en ce que** le dispositif de production d'énergie comprend de plus pour le fluide caloporteur un tonneau de stockage (27) se trouvant dans un circuit dans lequel le fluide caloporteur est véhiculé grâce à une pompe se trouvant à cette fin dans le circuit, la paroi de chaudière à double coque (15) et le sécheur à vapeur surchauffée (23) faisant aussi partie du circuit, où le tonneau de stockage se trouve au point le plus bas du circuit.

8. Dispositif de production d'énergie (1) selon la revendication 7, **caractérisé en ce que** le tonneau de stockage (27) est pourvu d'éléments de chauffage pour chauffer le fluide caloporteur et **en ce que** dans le circuit entre le tonneau de stockage et la paroi de chaudière (15) se trouve une soupape de dérivation (34) grâce à laquelle la paroi de chaudière du circuit peut être fermée et le fluide caloporteur est conduit depuis le tonneau de stockage vers le sécheur à vapeur surchauffée (23).

9. Dispositif de production d'énergie (101) selon la revendication 6, 7 ou 8, **caractérisé en ce que** dans l'espace (109) entre les parois intérieure et extérieure (111, 113) de la paroi de chaudière (105) se trouve un tube (115) étant entouré par le sel fondu ou le métal fondu, lequel tube est, en ses extrémités, connecté à des ouvertures d'apport et d'évacuation (125, 127) présentes dans la paroi extérieure (113) de la paroi de chaudière et est rempli d'un fluide d'évacuation de chaleur.

10. Dispositif de production d'énergie (101) selon la revendication 9, **caractérisé en ce que** le tube (115) est hélicoïdal.

11. Dispositif de production d'énergie (101) selon la revendication 10, **caractérisé en ce que** le tube (115) se trouve dans une double hélice, dont les hélices sont reliées l'une à l'autre en bas de la paroi de chaudière (105) et l'apport et l'évacuation (125, 127) se trouvent en haut de la paroi extérieure (113) de la paroi de chaudière (105).

12. Dispositif de production d'énergie (101) selon la revendication 9, 10 ou 11, **caractérisé en ce que** le dispositif de production d'énergie comprend de plus une pompe pour le pompage du sel fondu ou du métal fondu au sein de l'espace (109) entre les parois intérieure et extérieure (111, 113) et/ou pour le pompage du sel fondu ou du métal fondu vers un dispositif externe en faveur de l'échange d'énergie.

13. Dispositif de production d'énergie (1 ; 101) selon la revendication 9, 10, 11 ou 12, **caractérisé en ce que** le fond de la chaudière à combustion (13 ; 103) est constitué d'un brûleur à lit fluidisé (19 ; 129).

14. Méthode pour produire de l'énergie à partir de biomasse humide, comprenant :
- le séchage de biomasse humide ou de fumier humide (4),
- la conversion thermique de la biomasse sèche ou du fumier sec (6), et
- le chauffage d'un fluide caloporteur (9) grâce à la chaleur produite lors de la conversion thermique, et l'utilisation de ce fluide caloporteur chauffé pour sécher la biomasse humide ou le fumier humide,
- où le fluide caloporteur (9) est du sel fondu ou du métal fondu,
**caractérisée en ce que** la conversion thermique utilise un brûleur à lit fluidisé (19), et **en ce que** le fluide caloporteur (9) est chauffé jusqu'à une température au-dessus de 350 °C et est intégré au processus de séchage à cette température, où la biomasse humide est séchée grâce à de la vapeur surchauffée étant portée à une température au-dessus de 150 °C à l'aide du fluide caloporteur.

15. Méthode selon la revendication 14, **caractérisée en ce que** la vapeur surchauffée est portée à une température au-dessus de 180 °C.

16. Méthode selon la revendication 14 ou 15, **caractérisée en ce qu'**avant de commencer la conversion thermique de la biomasse sèche (6), le fluide caloporteur (9) est tout d'abord chauffé par des éléments de chauffage (30) et de la vapeur surchauffée est produite à l'aide du fluide caloporteur grâce à quoi la biomasse humide est séchée, après quoi en présence de suffisamment de biomasse sèche le processus de conversion thermique est démarré et le fluide caloporteur est uniquement chauffé grâce à la chaleur se libérant au cours du processus de conversion thermique.

17. Méthode selon la revendication 14, 15 ou 16, **caractérisée en ce que** de l'énergie est de plus récupérée à partir de la vapeur d'eau qui se forme lors du processus de séchage.

18. Méthode selon la revendication 14, 15, 16 ou 17, **caractérisée en ce que** le fluide caloporteur (9) est préchauffé par le gaz de combustion (28) sortant du dispositif de conversion thermique, ceci avant d'aller vers le dispositif de conversion thermique où il continue à être chauffé.

19. Méthode selon la revendication 18, **caractérisée en ce qu'**à partir du fluide caloporteur (9) provenant du processus de séchage, de l'énergie excédentaire est récupérée avant que le fluide caloporteur ne soit préchauffé.
